# FASCICULE DE BREVET EUROPEEN

(11) **EP 2 331 472 B1**
(45) Date de publication et mention de la délivrance du brevet: **05.11.2014**
(21) Numéro de dépôt: 09741353.8
(22) Date de dépôt: 01.09.2009
(51) Int. Cl.: C03B 5/235, C03C 3/078

(54) **PROCEDE D'OBTENTION DE VERRE**
VERFAHREN ZUR GLASHERSTELLUNG
PROCESS FOR OBTAINING GLASS

(30) Priorité: 01.09.2008 FR 0855847; 27.02.2009 FR 0951243; 26.06.2009 KR 20090057687
(43) Date de publication de la demande: 15.06.2011
(73) Titulaire: Saint-Gobain Glass France, 92400 Courbevoie (FR)
(72) Inventeur: CINTORA, Octavio, F-95150 Taverny (FR); SCHUSTER, Thomas, 52146 Würselen (DE); KIM, Byoung-Ouk, Dongjak-Gu (KR); MOON, Kidong, Jeollabuk-do (KR); CHOI, Junbo, Jeollabuk-do (KR); SILVA, Pédro, F-59500 Douai (FR)
(74) Mandataire: Teyssedre, Laurent
(86) Numéro de dépôt international: PCT/FR2009/051655
(87) Numéro de publication internationale: WO 2010/023419

(56) Documents cités:
- EP-A- 1 281 687
- EP-A- 1 291 330
- JP-A- 2007 238 398
- US-A- 4 599 100
- US-B1- 6 218 323

## Description

La présente invention se rapporte à un procédé d'obtention de verre et à une composition de verre susceptible d'être obtenue par ce procédé. Elle concerne en particulier une composition de verre silico-sodo-calcique destinée à la réalisation d'objets, en particulier se présentant sous la forme de feuilles de verre plat, ladite composition conférant à ces dits objets des propriétés de transmission élevée des rayonnements visibles et infrarouges. Elle concerne aussi le procédé permettant d'obtenir ladite composition.

Bien qu'elle ne soit pas limitée à une telle application, l'invention sera plus particulièrement décrite en référence à des applications dans le domaine du verre plat, notamment du verre susceptible d'être obtenu par le procédé de flottage (procédé « float »), consistant à déverser le verre en fusion sur un bain de métal fondu (en particulier l'étain).

Dans certains domaines de la technique, il est essentiel que les verres employés présentent une transmission du rayonnement visible et/ou infrarouge extrêmement élevée, notamment supérieure à 90%. C'est le cas par exemple dans des applications où le verre est utilisé sous la forme d'un substrat qui recouvre des cellules photovoltaïques ou des cellules solaires. Dans ce cas en effet, l'efficacité quantique de la cellule peut être fortement affectée par une diminution même très faible de la transmission des rayonnements visibles ou infrarouges.

La transmission dans le domaine du visible ou de l'infrarouge est généralement exprimée sous la forme d'un facteur de transmission intégrant sur une certaine partie du spectre la transmission pour chaque longueur d'ondes en tenant compte d'une distribution spectrale déterminée et éventuellement de la sensibilité de l'oeil humain. Pour quantifier la transmission du verre dans le domaine du visible, on définit ainsi un facteur de transmission lumineuse, appelée transmission lumineuse, souvent abrégée « T_{L} », calculé entre 380 et 780 nm et ramené à une épaisseur de verre de 3,2 mm ou 4 mm, selon la norme ISO 9050 :2003, en prenant donc en considération l'illuminant D65 tel que défini par la norme ISO/CIE 10526 et l'observateur de référence colorimétrique C.I.E. 1931 tel que défini par la norme ISO/CIE 10527. Pour quantifier la transmission du verre dans le domaine englobant le visible et l'infrarouge solaire (aussi appelé « proche infrarouge »), on définit un facteur de transmission énergétique, appelée « transmission énergétique », abrégée « T_{E} », calculé selon la norme ISO 9050 et ramené à une épaisseur de verre de 3,2 mm ou 4 mm. Selon la norme ISO 9050, la gamme de longueurs d'ondes utilisées pour le calcul va de 300 à 2500 nm. Toutefois, certaines valeurs seront données dans la suite du texte en limitant le calcul aux longueurs d'ondes allant de 400 à 1100 nm.

Il est connu pour atteindre des valeurs de T_{L} et T_{E} supérieures à 90%, de diminuer au maximum la teneur totale en oxyde de fer dans le verre. L'oxyde de fer, présent comme impureté dans la plupart des matières premières naturelles utilisées en verrerie (sable, feldspath, calcaire, dolomie...), absorbe à la fois dans le domaine du visible et proche ultraviolet (absorption due à l'ion ferrique Fe³⁺) et surtout dans le domaine du visible et proche infrarouge (absorption due à l'ion ferreux Fe²⁺). Avec les matières premières naturelles ordinaires, la teneur pondérale totale en oxyde de fer est de l'ordre de 0,1% (1000 ppm). Des transmissions de plus de 90% exigent toutefois d'abaisser la teneur en oxyde de fer à moins de 0,02% ou 200 ppm, voire moins de 0,01% (100 ppm), ce qui impose de choisir des matières premières particulièrement pures et accroît le coût du produit final.

Pour augmenter plus encore la transmission du verre, il est également connu de diminuer la teneur en fer ferreux au profit de la teneur en fer ferrique, donc d'oxyder le fer présent dans le verre. On vise ainsi des verres ayant un « rédox » le plus faible possible, idéalement nul ou quasi nul, le rédox étant défini comme étant le rapport entre la teneur pondérale en FeO (fer ferreux) et la teneur pondérale en oxyde de fer total (exprimé sous la forme Fe₂O₃). Ce nombre peut varier entre 0 et 0,9, des rédox nuls correspondant à un verre totalement oxydé.

Les verres comprenant des teneurs normales en oxyde de fer, de l'ordre de 1000 ppm ou plus, présentent naturellement des rédox de l'ordre de 0,25. En revanche, les verres comprenant de faibles quantités d'oxyde de fer, notamment moins de 200 ppm, voire moins de 150 ppm, ont une tendance naturelle à présenter des rédox élevés, supérieurs à 0,4, voire même à 0,5. Cette tendance est probablement due à un déplacement de l'équilibre d'oxydoréduction du fer en fonction de la teneur en oxyde de fer.

Diverses solutions ont été proposées pour oxyder le plus possible l'oxyde de fer, qui contribuent à obtenir des rédox très bas, inférieurs à 0,2. Il est par exemple connu de US 6844280 d'ajouter au verre de l'oxyde de cérium (CeO₂). L'oxyde de cérium est toutefois onéreux et susceptible d'être à l'origine du processus dit de « solarisation », dans lequel la transmission du verre diminue fortement après absorption de rayonnement ultraviolet. Il est également connu d'ajouter au verre de l'oxyde d'antimoine (Sb₂O₃) ou d'arsenic (As₂O₃), oxydes traditionnellement utilisés comme affinants du verre et qui ont la particularité d'oxyder le fer. L'utilisation de Sb₂O₃ est par exemple décrite dans la demande US 2006/249199 ou FR 2317242. Ces oxydes se sont toutefois révélés incompatibles avec le procédé de flottage du verre. Il semblerait que dans les conditions réductrices nécessaires à la non-oxydation du bain d'étain, une partie de ces oxydes se volatilise puis se condense sur la feuille de verre en formation, générant un voile indésirable. Les oxydes de vanadium et de manganèse ont également été proposés dans un but d'oxydation du fer.

L'oxydation du verre par des moyens chimiques présente un coût important et/ou n'est pas compatible avec le procédé de flottage du verre. En outre, la production de verres très oxydés s'est révélée diminuer considérablement la durée de vie des fours. La conductivité thermique radiative d'un bain de verre très oxydé (donc à forte transmission dans l'infrarouge), très élevée, génère des températures de sole bien plus fortes. Il en résulte une corrosion accrue des réfractaires constituant la sole du four, et une diminution de la durée de vie du four.

Il est connu du document US 6,218,323 un procédé de fabrication d'une feuille de verre sodo-calcique extra-clair, la méthode comprenant la fusion dans un four conventionnel de matières premières et le formage de la feuille de verre sur un bain d'étain. Le verre de l'exemple contient 0,3% SO₃, 0,02% Fe₂O₃ et a un rédox de 0,3 et le document revendique une teneur en Fe₂O₂ entre 0,01 et 0,02% ainsi qu'un rédox de 0,20 à 0,38.

La présente invention a pour but de fournir un procédé peu coûteux permettant d'obtenir un verre extra-clair de rédox intermédiaire sans utilisation de moyens d'oxydation chimique.

A cet effet, l'invention a pour objet un procédé continu d'obtention de verre, comprenant les étapes consistant à :
- charger des matières premières en amont d'un four comprenant plusieurs brûleurs aériens disposés au niveau des parois latérales du four, chacun des desdits brûleurs étant susceptible de développer une flamme transversalement à l'axe du four,
- obtenir une masse de verre fondu, puis,
- acheminer ladite masse de verre fondu vers une zone du four située plus en aval, au moins un desdits brûleurs disposé au niveau de cette zone étant alimenté avec une quantité sur-stoechiométrique en comburant telle que le rapport molaire oxygène / combustible supérieur ou égal à 1,1, puis,
- former une feuille de verre, ladite feuille de verre ayant une composition chimique qui comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0, |
| SO₃ | 0,1 - 0,4% |
| Fe₂O₃ (fer total) | 0 à 0,015%, |
| Rédox | 0,1 - 0,3. |

Dans l'ensemble du texte, les pourcentages sont des pourcentages pondéraux.

Le four de fusion est généralement constitué de réfractaires, en général des céramiques telles que les oxyde de silicium, d'aluminium, de zirconium, de chrome, ou les solutions solides d'oxydes d'aluminium, de zirconium et de silicium. Le four comprend en général une voûte supportée par des piédroits formant les parois latérales du four, des pignons amont et aval et une sole. Dans un procédé de fusion continu, on peut distinguer l'amont du four, qui correspond à la zone d'enfournement des matières premières, puis les zones plus en aval : la zone de fusion dans laquelle les matières premières sont transformées en verre fondu, puis la zone d'affinage, dans laquelle le bain de verre fondu est débarrassé de toute inclusion gazeuse, puis la zone de refroidissement, appelée braise, dans laquelle le verre est progressivement refroidi jusqu'à la température de formage, et enfin la zone de conditionnement thermique, où le verre est maintenu à sa température de formage, avant la zone de formage. La zone de formage n'est pas partie intégrante du four.

On entend par brûleur toute association d'au moins un injecteur de combustible (en général gazeux, comme le gaz naturel ou le propane, ou liquide, comme le fioul) et d'au moins un injecteur de comburant (en général l'air ou l'oxygène), l'association étant disposée de manière à ce qu'elle puisse développer une flamme par réaction de combustion entre le comburant et le combustible.

Les inventeurs ont mis en évidence qu'une combustion sur-stoechiométrique en comburant dans une partie aval du four permettait d'obtenir des verres pauvres en oxyde de fer et de rédox intermédiaires, verres que l'on ne pouvait obtenir auparavant. Ce résultat est particulièrement surprenant car il était d'usage de penser que dans un four, compte tenu du grand volume de verre rapporté à une faible surface libre, l'oxydation d'un bain de verre par maintien d'une atmosphère gazeuse plus oxydée au niveau de la surface du verre n'était pas possible.

On entend par « brûleur aérien » un brûleur développant une flamme située au-dessus du bain de verre fondu, et susceptible de chauffer ce bain de verre par rayonnement.

Les brûleurs aériens sont de préférence disposés régulièrement depuis l'amont vers l'aval du four et/ou sont agencés par paires de brûleurs se faisant face, les brûleurs de chaque paire fonctionnant en alternance de manière à ce qu'à un instant donné seuls les brûleurs disposés au niveau d'une des parois latérales développent une flamme.

Ce type de four est parfois appelé « four à brûleurs transversaux ». L'alternance du fonctionnement des paires de brûleurs permet d'utiliser des régénérateurs, au travers desquels les gaz de combustion et le comburant sont obligés de passer. Constitués d'empilements de pièces réfractaires, les régénérateurs permettent de stocker la chaleur émise par les gaz de combustion et de restituer cette chaleur au gaz comburant. Dans une première phase de l'alternance, les régénérateurs situés au niveau des brûleurs qui ne fonctionnent pas (ces brûleurs sont disposés au niveau d'une première paroi) stockent l'énergie émise par les flammes développées par les brûleurs situés au niveau d'une deuxième paroi, qui fait face à la première paroi. Dans une deuxième phase de l'alternance, les brûleurs disposés au niveau de la deuxième paroi s'arrêtent, tandis que les brûleurs disposés au niveau de la première paroi se mettent à fonctionner. Le gaz de combustion (dans ce cas, en général de l'air), qui passe dans régénérateurs, est alors préchauffé, ce qui permet des économies d'énergie substantielles.

Afin d'optimiser la fusion, le four comprend de préférence entre 6 et 8 paires de brûleurs, et seules les deux ou trois paires de brûleurs situées le plus en aval, ou la dernière paire de brûleurs située le plus en aval, sont alimentées avec une quantité sur-stoechiométrique en comburant. Les autres brûleurs, situés plus en amont sont de préférence alimentés avec une quantité stoechiométrique ou sous-stoechiométrique en comburant.

Le four comprend de préférence, depuis l'amont vers l'aval, une première cuve délimitant une zone de fusion du verre puis une zone d'affinage, puis une deuxième cuve délimitant une zone de refroidissement du verre fondu, tous les brûleurs étant disposés au niveau de la première cuve. En général un zone de transition appelée corset et se présentant sous la forme d'une cuve de section plus étroite sépare les deux cuves précédemment décrites.

On entend par affinage l'élimination des inclusions gazeuses incorporées dans la masse de verre, en particulier du fait des réactions de décarbonatation de certaines matières premières. Dans le type de four susmentionné, la zone d'affinage se situe en aval de la première cuve du four.

Le ou chaque brûleur alimenté avec une quantité sur-stoechiométrique en comburant est alors de préférence situé au niveau de la zone d'affinage du verre. C'est en effet dans cette zone d'affinage que l'oxydation du verre est la plus efficace.

Les brûleurs sont de préférence alimentés avec de l'air et un combustible. L'oxygène est également utilisable, de même que tout type d'air enrichi en oxygène. L'oxygène est plus coûteux à l'usage mais permet de ne pas employer de régénérateurs.

Le combustible est de préférence choisi parmi le gaz naturel et le fioul, ou l'un quelconque de leurs mélanges. L'utilisation de fioul est préférée car elle permet l'obtention des rédox les plus intéressants.

La quantité sur-stoechiométrique en comburant est de préférence telle que le rapport molaire oxygène / combustible est inférieure ou égal à 1,5, (notamment 1,3.

La pression partielle d'oxygène au dessus du bain de verre est de préférence comprise entre 4 et 7%. En-deçà de 4%, le rédox est difficile à contrôler, tandis qu'au-delà de 7% se posent des problèmes de surconsommation d'énergie. Le contrôle du rédox par le biais de la pression partielle d'oxygène est réalisé selon la réaction chimique suivante :

O₂ + 4 Fe²⁺ → 2 O²⁻ + 4 Fe³⁺

Les phénomènes de thermoconvection au sein des fours créent deux courroies (ou flux) de circulation du verre, une première courroie au niveau de la zone de fusion, allant de la zone d'introduction des matières premières jusqu'au point chaud, dans laquelle le verre chaud de surface est ramené vers la zone d'introduction des matières premières, et une deuxième courroie de circulation depuis le point chaud jusqu'à la sortie du four, donc au niveau de la zone d'affinage et de la zone de refroidissement, dans laquelle une partie du verre de surface plonge vers la sole pour revenir vers le point chaud. L'existence de ces courroies contribue grandement à l'homogénéité chimique du verre. Un contrôle strict de la longueur de chacune des courroies est nécessaire pour assurer un bon rendement. Généralement, dans le cas de la fusion d'un verre à basse teneur en fer, la température de sole est augmentée en comparaison avec le cas de la fusion d'un verre à teneur normale en fer. Pour cette raison, la première courroie est raccourcie, et la deuxième courroie allongée, ce qui peut causer des problèmes de rebullage lié à la quantité de SO₃ résiduelle dans le verre.

De manière surprenante, le maintien d'une pression partielle d'oxygène élevée, plus élevée que dans le cas de la fusion d'un verre à teneur normale en fer, permet de ne pas allonger la deuxième courroie de circulation, pour une stabilité de production accrue et un meilleur rendement.

La feuille de verre est de préférence formée par flottage sur un bain d'étain. D'autres types de procédé de formage peuvent être employés, tels que les procédés d'étirage, procédé « down-draw », procédé de laminage, procédé Fourcault...

Les matières premières chargées dans le four sont de préférence des matières solides pulvérulentes. On peut en particulier citer le sable, le carbonate de sodium, le calcaire, la dolomie, les feldspaths. Toutefois, la dolomie contient fréquemment de l'oxyde de fer en tant qu'impureté, si bien qu'elle n'est de préférence pas employée dans le cadre de l'invention.

Le soufre (SO₃) est de préférence apporté par du sulfate de sodium ou du sulfate de calcium (appelé gypse). Pour accélérer la fusion, il est préférable d'apporter, conjointement au sulfate, un réducteur tel que du coke. La quantité de sulfate apportée est de préférence comprise entre 0,2 et 0,6%, notamment entre 0,3 et 0,5%, voire entre 0,4 et 0,5%, exprimés en pourcentages massiques de SO₃. La quantité de coke est avantageusement comprise entre 0 et 1000 ppm, voire entre 50 et 120 ppm (1 ppm = 0,0001%), notamment entre 60 et 80 ppm. Il est également possible, pour favoriser l'oxydation du fer, d'introduire un nitrate, tel que le nitrate de sodium.

De préférence, la feuille de verre présente une composition chimique qui comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0, |
| SO₃ | > 0, 2 - 0,4% |
| Fe₂O₃ (fer total) | 0 à 0,015%, |
| Rédox | 0,2 - 0,30. |

Cette gamme de rédox permet d'obtenir des propriétés optiques très satisfaisantes, tout en conservant une durée de vie des fours élevée.

La présence de fer dans une composition de verre peut résulter des matières premières, en tant qu'impuretés, ou d'un ajout délibéré visant à colorer le verre. Il est connu que le fer existe dans la structure du verre sous la forme d'ions ferriques (Fe³⁺) et d'ions ferreux (Fe²⁺). La présence d'ions Fe³⁺ confère au verre une très légère coloration jaune et permet d'absorber les radiations ultraviolettes. La présence d'ions Fe²⁺ donne au verre une coloration bleu-vert plus prononcée et induit une absorption du rayonnement infrarouge. L'augmentation de la teneur en fer sous ses deux formes accentue l'absorption des radiations aux extrémités du spectre visible, cet effet se faisant au détriment de la transmission lumineuse.

Dans la présente invention, la teneur en Fe₂O₃ (fer total) est de préférence inférieure à 0,015%, voire inférieure ou égale à 0,012%, notamment 0,010%, ce afin d'augmenter la transmission optique du verre. La teneur en Fe₂O₃ est de préférence supérieure ou égale à 0,005%, notamment 0,008% pour ne pas trop pénaliser le coût du verre.

Le rédox est de préférence supérieur ou égal à 0,15, et notamment compris entre 0,2 et 0,30, notamment entre 0,25 et 0,30. De trop faibles rédox contribuent en effet à la réduction de la durée de vie des fours.

La présence de soufre dans la composition, dont la teneur est exprimée en SO₃ quelle que soit sa forme réelle, résulte généralement de l'emploi de sulfates comme agents d'affinage. Les sulfates, notamment de sodium ou de calcium (gypse) sont ajoutés avec les matières premières, en général conjointement avec un agent réducteur comme le coke. La décomposition de ces sulfates au sein du bain de verre permet d'affiner le verre, c'est-à-dire de le débarrasser de ses inclusions gazeuses. Il a également été observé que l'ajout de sulfates permettait d'accélérer considérablement la fusion, c'est-à-dire de diminuer le temps nécessaire pour que les matières les plus réfractaires (en général le sable) soient parfaitement dissoutes dans le bain de verre. Afin de pouvoir obtenir un verre à moindre coût, avec une cinétique de fusion très rapide, les teneurs en SO₃ sont donc de préférence supérieures à 0,2%. Au-delà de 0,4% existe en revanche un risque d'apparition de sulfures, qui sont des espèces très colorantes, et un risque d'apparition de mousse, voire de rebullage. La teneur en SO₃ dans le verre est de préférence supérieure ou égale à 0,25% et/ou inférieure ou égale à 0,35%, notamment à 0,30%.

Dans les verres obtenus selon l'invention, la silice SiO₂ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

L'alumine Al₂O₃ joue un rôle particulièrement important sur la résistance hydrolytique du verre. Sa teneur est de préférence comprise entre 0 et 5%, notamment entre 0 et 3%. Lorsque le verre obtenu selon l'invention est destiné à être utilisé dans des ambiances chaudes et humides, la teneur en alumine est de préférence supérieure ou égale à 1%, voire 2%. Une teneur comprise entre 0,5 et 1,5% est optimale.

Les oxydes alcalins Na₂O et K₂O facilitent la fusion du verre et permettent d'ajuster sa viscosité aux températures élevées afin de le maintenir proche de celle d'un verre standard. K₂O peut être utilisé jusqu'à 10 % car au-delà se pose le problème du coût élevé de la composition. Par ailleurs, l'augmentation du pourcentage de K₂O ne peut se faire, pour l'essentiel, qu'au détriment de Na₂O, ce qui contribue à augmenter la viscosité. La somme des teneurs en Na₂O et K₂O, exprimées en pourcentages pondéraux, est de préférence égale ou supérieures à 10 % et avantageusement inférieure à 20 %. Si la somme de ces teneurs est supérieures à 20 % ou si la teneur en Na₂O est supérieure à 18 %, la résistance hydrolytique est fortement réduite. Les verres obtenus selon l'invention sont de préférence exempts d'oxyde de lithium Li₂O du fait de son coût élevé. Une teneur en Na₂O comprise entre 10 et 15%, notamment entre 13,5 et 14,5% est préférée. La teneur en K₂O est normalement comprise entre 0 et 5%, de préférence inférieure à 1%, voire à 0,5%.

Les oxydes alcalino-terreux permettent d'adapter la viscosité du verre aux conditions d'élaboration.

Une teneur en CaO comprise entre 7 et 12%, notamment entre 7 et 10%, voire en 8 et 9% est préférée.

MgO peut être utilisé jusqu'à 10 % environ et sa suppression peut être compensée, au moins en partie, par une augmentation de la teneur en Na₂O et/ou SiO₂. De préférence, la teneur en MgO est inférieure à 5 %. De faibles teneurs en MgO permettent en outre de diminuer le nombre de matières premières nécessaires à la fusion du verre. La teneur en MgO est de préférence comprise entre 1 et 5%, notamment entre 2 et 5%. De manière surprenante, les meilleurs résultats de transmission énergétique ont été obtenus pour des teneurs en MgO comprises entre 1 et 5%, notamment entre 2,5 et 4,5%. Les inventeurs ont pu mettre en évidence un effet surprenant de la teneur en MgO sur le rédox du verre, une substitution progressive de CaO par MgO ayant pour effet de réduire ledit rédox, et donc d'accroître la transmission énergétique. La réduction de la teneur en CaO permet en outre de diminuer les risques de dévitrification du verre et d'élargir sa marge de formage, permettant un formage plus stable.

BaO a une influence beaucoup plus faible que CaO et MgO sur la viscosité du verre et l'augmentation de sa teneur se fait essentiellement au détriment des oxydes alcalins, de MgO et surtout de CaO. Toute augmentation de BaO contribue à augmenter la viscosité du verre aux basses températures. De manière préférée, les verres obtenus par le procédé selon l'invention sont exempts de BaO et également d'oxyde de strontium (SrO), ces éléments présentant un coût élevé.

Le verre obtenu selon l'invention comprend de préférence une teneur en TiO₂ comprise entre 0 et 0,1%, notamment entre 0,01% et 0,05%.

Des compositions préférées obtenues selon l'invention sont reproduites ci-après :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0, |
| SO₃ | > 0,2 - 0,4% |
| Fe₂O₃ (fer total) | 0 à 0,015%, |
| Rédox | 0,2 - 0,30. |

D'autres compositions préférées obtenues selon l'invention sont reproduites ci-après :

| | |
|---|---|
| SiO₂ | 65 - 75 % |
| Al₂O₃ | 0 - 3 % |
| CaO | 7 - 12 % |
| MgO | 2 - 5 % |
| Na₂O | 10 - 15 % |
| K₂O | 0 - 5 % |
| SO₃ | 0,1 - 0,3% |
| Fe₂O₃ (fer total) | 0 à moins de 0,015%, |
| Rédox | 0,1 - 0,3. |

De préférence, la feuille de verre ayant une telle composition présente pour une épaisseur de 4 mm une transmission lumineuse supérieure ou égale à 91%, une transmission énergétique supérieure ou égale à 90,2% sur la gamme de longueur d'ondes allant de 300 à 2500 nm, et une transmission énergétique supérieure ou égale à 90,5% sur la gamme de longueur d'ondes allant de 400 à 1100 nm, qui correspond au domaine où l'efficacité quantique des cellules solaires est maximale.

D'autres compositions préférées obtenues selon l'invention sont reproduites ci-après :

| | |
|---|---|
| SiO₂ | 65 - 75 % |
| Al₂O₃ | 0 - 5 % |
| CaO | 7 - 12 % |
| MgO | 1 - 5 % |
| Na₂O | 10 - 15 % |
| K₂O | 0 - 5 % |
| SO₃ | 0,2 - 0,4% |
| Fe₂O₃ (fer total) | 0 à moins de 0,015%, |
| Rédox | 0,1 - 0,3. |

De préférence, la feuille de verre ayant une telle composition présente pour une épaisseur de 4 mm une transmission lumineuse supérieure ou égale à 91,2%, une transmission énergétique supérieure ou égale à 90,0% sur la gamme de longueur d'ondes allant de 300 à 2500 nm, et une transmission énergétique supérieure ou égale à 90,5% sur la gamme de longueur d'ondes allant de 400 à 1100 nm.

La composition de verre peut comprendre, outre les impuretés inévitables contenues notamment dans les matières premières, une faible proportion (jusqu'à 1 %) d'autres constituants, par exemple des agents aidant à la fusion ou l'affinage du verre (Cl...), ou encore des éléments provenant de la dissolution des réfractaires servant à la construction des fours (par exemple ZrO₂). Pour les raisons déjà évoquées, la composition selon l'invention ne comprend de préférence pas d'oxydes tels que Sb₂O₃, As₂O₃ ou CeO₂.

La composition de verre obtenu selon l'invention ne comprend de préférence aucun agent absorbant les rayonnements visibles ou infrarouges (notamment pour une longueur d'ondes comprise entre 380 et 1000 nm) autre que ceux déjà cités. En particulier, la composition selon l'invention ne contient de préférence aucun des agents suivants : les oxydes d'éléments de transition tels que CoO, CuO, Cr₂O₃, NiO, MnO₂, V₂O₅, les oxydes de terres rares tels que CeO₂, La₂O₃, Nd₂O₃, Er₂O₃, ou encore les agents colorants à l'état élémentaire tels que Se, Ag, Cu. Parmi les autres agents de préférence exclus figurent également les oxydes des éléments suivants : Sc, Y, Pr, Sm, Eu, Gd, Tb, Dy, Ho, Tm, Yb, Lu. Ces agents ont bien souvent un effet colorant indésirable très puissant, se manifestant à de très faibles teneurs, parfois de l'ordre de quelques ppm ou moins (1 ppm = 0,0001%). Leur présence diminue ainsi très fortement la transmission du verre.

La feuille de verre obtenue selon l'invention présente de préférence, pour une épaisseur de 3,2 mm, une transmission lumineuse T_{L} d'au moins 90%, notamment 90,5%, voire 91,0%. La transmission lumineuse pour une épaisseur de 4 mm est de préférence supérieure ou égale à 91%, notamment 91,2%. Avantageusement, la feuille de verre obtenue selon l'invention présente, toujours pour une épaisseur de 3,2 mm, une transmission énergétique T_{E} d'au plus 91%. Pour une épaisseur de 4 mm, la transmission énergétique est de préférence supérieure ou égale à 90,2%. Pour une même épaisseur, la transmission énergétique calculée pour une gamme de longueurs d'ondes allant de 400 à 1100 nm est de préférence supérieure ou égale à 90,5%.

La feuille de verre obtenue selon l'invention peut être utilisée dans des cellules photovoltaïques, cellules solaires, miroirs plans ou paraboliques pour la concentration d'énergie solaire, ou encore des diffuseurs pour rétro-éclairage d'écrans de visualisation du type LCD (écrans à cristaux liquides). La feuille de verre obtenue selon l'invention peut également être employée pour des applications intérieures (cloisons, ameublement...) ou dans l'électroménager (tablettes de réfrigérateurs...) ou pour des vitrages dans le domaine du bâtiment ou de l'automobile. Elle peut encore être employée dans des écrans ou lampes planes à base de diodes électroluminescentes organiques.

La feuille de verre obtenue selon l'invention peut avantageusement être revêtue d'au moins une couche mince transparente et électroconductrice et/ou d'un revêtement antireflets, de préférence d'une couche mince transparente et électroconductrice sur une première face, et d'un revêtement antireflets sur une deuxième face. Selon les applications, d'autres couches ou empilements de couches peuvent être déposés sur l'une et/ou l'autre face de la feuille de verre. Il peut notamment s'agir d'une couche photocatalytique, autonettoyante ou antisalissure. Il peut aussi s'agir de couches ou d'empilements à fonction thermique, notamment antisolaires ou bas-émissifs, par exemple des empilements comprenant une couche d'argent protégée par des couches diélectriques. Il peut encore s'agir d'une couche miroir, notamment à base d'argent, d'une couche décorative tel qu'une laque ou un émail.

La feuille de verre obtenue selon l'invention peut être intégrée à un vitrage, simple ou multiple (notamment double ou triple), au sens où il peut comprendre plusieurs feuilles de verre ménageant un espace rempli de gaz. Le vitrage peut également être feuilleté et/ou trempé et/ou durci et/ou bombé.

Dans le cas des applications dans le domaine du photovoltaïque, et afin de maximiser le rendement énergétique de la cellule, plusieurs améliorations peuvent être apportées, cumulativement ou alternativement :
- le substrat peut avantageusement être revêtu d'au moins une couche mince transparente et électroconductrice, par exemple à base de SnO₂:F, SnO₂:Sb, ZnO:Al, ZnO:Ga. Ces couches peuvent être déposées sur le substrat par différents procédés de dépôt, tels que le dépôt chimique en phase vapeur (CVD) ou le dépôt par pulvérisation cathodique, notamment assisté par champ magnétique (procédé magnétron). Dans le procédé CVD, des précurseurs halogénures ou organométalliques sont vaporisés et transportés par un gaz vecteur jusqu'à la surface du verre chaud, où ils se décomposent sous l'effet de la chaleur pour former la couche mince. L'avantage du procédé CVD est qu'il est possible de le mettre en oeuvre au sein du procédé de formage de la feuille de verre, notamment lorsqu'il s'agit d'un procédé de flottage. Il est ainsi possible de déposer la couche au moment où la feuille de verre est sur le bain d'étain, à la sortie du bain d'étain, ou encore dans l'étenderie, c'est-à-dire au moment où la feuille de verre est recuite afin d'éliminer les contraintes mécaniques. La feuille de verre revêtue d'une couche transparente et électroconductrice peut être à son tour revêtue d'un semi-conducteur à base de silicium amorphe ou polycristallin, de chalcopyrites (notamment du type CIS - CuInSe₂ ou de type CIGS - CuInGaSe₂) ou de CdTe pour former une cellule photovoltaïque. Il peut notamment s'agir d'une deuxième couche mince à base de silicium amorphe, de CIS ou de CdTe. Dans ce cas, un autre avantage du procédé CVD réside en l'obtention d'une rugosité plus forte, qui génère un phénomène de piégeage de la lumière, lequel augmente la quantité de photons absorbée par le semi-conducteur.
- le substrat peut être revêtu sur au moins une de ses faces d'un revêtement antireflets. Ce revêtement peut comprendre une couche (par exemple à base de silice poreuse à bas indice de réfraction) ou plusieurs couches : dans ce dernier cas un empilement de couches à base de matériau diélectrique alternant des couches à bas et haut indices de réfraction et se terminant par une couche à bas indice de réfraction est préféré. Il peut notamment s'agir d'un empilement décrit dans la demande WO 01/94989 ou WO 2007/077373. Le revêtement antireflet peut également comprendre en dernière couche une couche autonettoyante et antisalissure à base d'oxyde de titane photocatalytique, tel qu'enseigné dans la demande WO 2005/110937. On peut ainsi obtenir une faible réflexion durable dans le temps. Dans des applications dans le domaine du photovoltaïque, le revêtement antireflet est disposé en face externe, c'est-à-dire la face en contact avec l'atmosphère, tandis que l'éventuelle couche transparente électroconductrice est disposée en face interne, du côté du semi-conducteur.
- la surface du substrat peut être texturée, par exemple présenter des motifs (notamment en pyramide), tel que décrit dans les demandes WO 03/046617, WO 2006/134300, WO 2006/134301 ou encore WO 2007/015017. Ces texturations sont en général obtenues à l'aide d'un formage du verre par laminage.

Dans le domaine des cellules photovoltaïques ou solaires, la feuille de verre obtenue selon l'invention constitue de préférence le couvercle de protection desdites cellules. La feuille de verre peut être employée dans tous types de technologies : wafers de silicium mono- ou polycristallin, couches minces de silicium amorphe, de CdTe, ou encore de CIS (séléniure de cuivre et d'indium, CuInSe₂) ou CIGS (CuInGaSe₂).

L'invention est illustrée par l'exemple non limitatif qui suit.

Dans un four à brûleurs transversaux et régénérateurs comprenant 7 paires de brûleurs sont chargées des matières premières pulvérulentes (principalement du sable, du carbonate de sodium, du calcaire, de la dolomie). La pureté des matières premières est telle que la teneur en oxyde de fer (Fe₂O₃) n'est que de 0,0115%. Le système affinant employé est le couple sulfate de sodium / coke. Les brûleurs emploient du fioul comme comburant et de l'air comme combustible. Un bain de verre est obtenu, qui est ensuite déversé sur un bain d'étain en fusion pour obtenir une feuille de verre de 3,85mm selon le procédé conventionnellement connu sous le nom de procédé « float ».

Selon un exemple comparatif, les 7 paires de brûleurs aériens sont alimentés par un mélange stoechiométrique. Le rédox obtenu est de 0,42, et la teneur en sulfate est de 0,25% SO₃. La transmission énergétique (T_{E}) calculée selon la norme ISO 9050 pour une épaisseur de 3,85mm est de 90,0%.

Dans l'exemple selon l'invention, les 3 paires de brûleurs situées le plus en aval sont alimentées en une quantité sur-stoechiométrique en comburant, de sorte que le rapport molaire O₂ / comburant est de 1,1. Le rédox de la feuille de verre obtenue chute à 0,27, ce qui s'accompagne d'une augmentation de transmission énergétique à 90,7%, et même jusqu'à 0,25, pour une transmission énergétique de 90,9%. La température de sole au niveau du point chaud reste inférieure à 1350°C, ce qui n'affecte pas la durée de vie du four.

Les compositions testées sont reproduites dans le tableau 1 ci-après. Les teneurs sont indiquées en pourcentages pondéraux. Les propriétés optiques sont les suivantes, pour une épaisseur de 3,85 mm :
- la transmission énergétique (TE) calculée selon la norme ISO 9050 :2003
- le facteur de transmission lumineuse globale (TL), calculé entre 380 et 780 mm, au sens de la norme ISO 9050 :2003, donc en prenant en considération l'illuminant D65 tel que défini par la norme ISO/CIE 10526 et l'observateur de référence colorimétrique C.I.E. 1931 tel que défini par la norme ISO/CIE 10527.

**Tableau 1**

| | C1 | 1 | 2 |
|---|---|---|---|
| SiO₂ | 71, 86 | 71,86 | 71,86 |
| Al₂O₃ | 0,53 | 0, 53 | 0,53 |
| TiO₂ | 0,01 | 0,01 | 0,01 |
| CaO | 9,4 | 9,4 | 9,4 |
| MgO | 4,0 | 4,0 | 4,0 |
| Na₂O | 14,0 | 14,0 | 14,0 |
| K₂O | 0,01 | 0,01 | 0,01 |
| SO₃ | 0,25 | 0,25 | 0,25 |
| Fe₂O₃ | 0,0090 | 0,0090 | 0,0090 |
| Rédox | 0,42 | 0,27 | 0,25 |
| TL (%) | 91,2 | 91,5 | 91,5 |
| TE (%) | 90,0 | 90,7 | 90, 9 |

L'exemple C1 est un exemple comparatif, obtenu par des méthodes de production traditionnelle, donc avec des brûleurs ne fonctionnant pas en sur-stoechiométrie en oxygène.

Le tableau 2 ci-après illustre l'influence de la teneur en MgO sur le rédox.

**Tableau 2**

| | 3 | 4 | 5 | 6 | 7 | 8 |
|---|---|---|---|---|---|---|
| SiO₂ | 72,7 | 72,5 | 72,4 | 72,4 | 72,3 | 72,3 |
| Al₂O₃ | 1,04 | 1,04 | 1,02 | 1,02 | 1,02 | 1,02 |
| TiO₂ | 0,03 | 0,03 | 0,03 | 0,03 | 0,03 | 0,03 |
| CaO | 12,3 | 11,4 | 10,4 | 9,4 | 8,4 | 7,4 |
| MgO | - | 1,0 | 2,0 | 3,0 | 4,0 | 5,0 |
| Na₂O | 13,4 | 13,5 | 13,8 | 13,7 | 13,8 | 13,8 |
| K₂O | 0,02 | 0,02 | 0,02 | 0,02 | 0,02 | 0,02 |
| SO₃ | 0,36 | 0,33 | 0,35 | 0,30 | 0,32 | 0,30 |
| Fe₂O₃ | 0,0090 | 0,0096 | 0,0104 | 0,0124 | 0,0116 | 0,0125 |
| Rédox | 0,19 | 0,14 | 0,15 | 0,13 | 0,12 | 0,11 |

## Revendications

1. Procédé continu d'obtention de verre, comprenant les étapes consistant à :
- charger des matières premières en amont d'un four comprenant plusieurs brûleurs aériens disposés au niveau des parois latérales du four, chacun des desdits brûleurs étant susceptible de développer une flamme transversalement à l'axe du four,
- obtenir une masse de verre fondu, puis,
- acheminer ladite masse de verre fondu vers une zone du four située plus en aval, au moins un desdits brûleurs disposé au niveau de cette zone étant alimenté avec une quantité sur-stoechiométrique en comburant telle que le rapport molaire oxygène / combustible est supérieur ou égal à 1,1, puis,
- former une feuille de verre, ladite feuille de verre ayant une composition chimique qui comprend les constituants suivants en une teneur variant dans les limites pondérales ci-après définies :
| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0, |
| SO₃ | 0,1 - 0,4% |
| Fe₂O₃ (fer total) | 0 à 0,015%, |
| Rédox | 0,1 - 0,3. |

2. Procédé selon la revendication précédente, dans lequel les brûleurs aériens sont disposés régulièrement depuis l'amont vers l'aval du four et sont agencés par paires de brûleurs se faisant face, les brûleurs de chaque paire fonctionnant en alternance de manière à ce qu'à un instant donné seuls les brûleurs disposés au niveau d'une des parois latérales développent une flamme.

3. Procédé selon la revendication précédente, tel que le four comprend entre 6 et 8 paires de brûleurs, et seules les deux ou trois paires de brûleurs situées le plus en aval, ou la dernière paire de brûleurs située le plus en aval, sont alimentées avec une quantité sur-stoechiométrique en comburant.

4. Procédé selon l'une des revendications précédentes, tel que le four comprend, depuis l'amont vers l'aval, une première cuve délimitant une zone de fusion du verre puis une zone d'affinage, puis une deuxième cuve délimitant une zone de refroidissement du verre fondu, tous les brûleurs étant disposés au niveau de la première cuve.

5. Procédé selon la revendication précédente, tel que le ou chaque brûleur alimenté avec une quantité sur-stoechiométrique en comburant est situé au niveau de la zone d'affinage du verre.

6. Procédé selon l'une des revendications précédentes, tel que les brûleurs sont alimentés avec de l'air et un combustible.

7. Procédé selon la revendication précédente, tel que le combustible est choisi parmi le gaz naturel et le fioul, ou l'un quelconque de leurs mélanges.

8. Procédé selon l'une des revendications précédentes, tel que la quantité sur-stoechiométrique en comburant est telle que le rapport polaire oxygène / combustible est compris entre 1,1 et 1,3.

9. Procédé selon l'une des revendications précédentes, tel que la feuille de verre est formée par flottage sur un bain d'étain.

10. Procédé selon l'une des revendications précédentes, tel que la pression partielle d'oxygène au dessus du bain de verre est comprise entre 4 et 7%.

11. Procédé selon l'une des revendications précédentes, tel que la teneur en oxyde de fer est inférieure à 0,015%, notamment inférieure ou égale à 0,012% ou 0,010%.

12. Procédé selon l'une des revendications précédentes, tel que le rédox est compris entre 0,2 et 0,30, notamment entre 0,25 et 0,30.

13. Procédé selon l'une des revendications précédentes, tel que la teneur en SO₃ est supérieure ou égale à 0,2%.

14. Procédé selon l'une des revendications précédentes, tel que la feuille de verre ne comprend aucun oxyde ou métal suivant : Sb₂O₃, As₂O₃, CeO₂, CoO, CuO, NiO, Cr₂O₃, MnO₂, V₂O₅, La₂O₃, Nd₂O₃, Er₂O₃, Se, Ag, Cu.

## Patentansprüche

1. Kontinuierliches Verfahren zur Herstellung von Glas, umfassend die Schritte, die darin bestehen:
- Rohstoffe vor einem Ofen einzutragen, der mehrere oberirdische Brenner umfasst, die im Bereich der Seitenwände des Ofens angeordnet sind, wobei ein jeder der Brenner geeignet ist, eine Flamme quer zur Achse des Ofens zu entwickeln,
- eine Masse von geschmolzenem Glas zu erhalten, anschließend
- die Masse von geschmolzenem Glas zu einem weiter stromabwärts gelegenen Bereich des Ofens zu befördern, wobei wenigstens einer der Brenner, der in Höhe dieses Bereichs angeordnet ist, mit einer überstöchiometrischen Menge an Sauerstoffträger beaufschlagt wird, die derart ist, dass das Sauerstoff/Brennstoff-Molverhältnis größer als oder gleich 1,1 ist, dann
- eine Glasscheibe zu bilden, wobei die Glasscheibe eine chemische Zusammensetzung aufweist, die die folgenden Bestandteile in einem Gehalt, der innerhalb der nachstehend definierten Gewichtsgrenzen variiert, umfasst:
| | |
|---|---|
| SiO₂ | 60 - 75 % |
| Al₂O₃ | 0 - 10 % |
| B₂O₃ | 0 - 5 %, vorzugsweise 0 |
| CaO | 5 - 15% |
| MgO | 0 - 10 % |
| Na₂O | 5 - 20% |
| K₂O | 0 - 10 % |
| BaO | 0 - 5 %, vorzugsweise 0, |
| SO₃ | 0,1 - 0,4 % |
| Fe₂O₃ (Gesamteisen) | 0 - 0,015 % |
| Redox | 0,1 - 0,3. |

2. Verfahren nach dem vorhergehenden Anspruch, bei dem die oberirdischen Brenner von stromaufwärts nach stromabwärts des Ofens gleichmäßig angeordnet sind sowie in Paaren von Brennern, die sich gegenüberliegen, angeordnet sind, wobei die Brenner eines jeden Paares derart abwechselnd arbeiten, dass zu einem gegebenen Zeitpunkt lediglich die Brenner, die im Bereich von einer der Seitenwände angeordnet sind, eine Flamme entwickeln.

3. Verfahren nach dem vorhergehenden Anspruch, welches derart ist, dass der Ofen zwischen 6 und 8 Brennerpaare umfasst und lediglich die zwei oder drei Brennerpaare, die am weitesten stromabwärts gelegen sind, oder das letzte Brennerpaar, das am weitesten stromabwärts gelegen ist, mit einer überstöchiometrischen Menge an Sauerstoffträger beaufschlagt werden.

4. Verfahren nach einem der vorhergehenden Ansprüche, welches derart ist, dass der Ofen von stromaufwärts nach stromabwärts einen ersten Schacht, der einen Bereich zum Schmelzen des Glases begrenzt, dann einen Läuterungsbereich, anschließend einen zweiten Schacht, der einen Bereich zum Kühlen des geschmolzenen Glases begrenzt, umfasst, wobei alle Brenner im Bereich des ersten Schachts angeordnet sind.

5. Verfahren nach dem vorhergehenden Anspruch, welches derart ist, dass der oder jeder Brenner, der mit einer überstöchiometrischen Menge an Sauerstoffträger beaufschlagt wird, in Höhe des Bereichs zum Läutern des Glases gelegen ist.

6. Verfahren nach einem der vorhergehenden Ansprüche, welches derart ist, dass die Brenner mit Luft und einem Brennstoff beaufschlagt werden.

7. Verfahren nach dem vorhergehenden Anspruch, welches derart ist, dass der Brennstoff aus Erdgas und Heizöl oder irgendeinem ihrer Mischungen ausgewählt ist.

8. Verfahren nach einem der vorhergehenden Ansprüche, welches derart ist, dass die überstöchiometrische Menge an Sauerstoffträger derart ist, dass das Sauerstoff/Brennstoff-Molverhältnis zwischen 1,1 und 1,3 liegt.

9. Verfahren nach einem der vorhergehenden Ansprüche, welches derart ist, dass die Glasscheibe durch Floating auf einem Zinnbad gebildet wird.

10. Verfahren nach einem der vorhergehenden Ansprüche, welches derart ist, dass der Sauerstoff-Partialdruck oberhalb des Glasbades zwischen 4 und 7 % beträgt.

11. Verfahren nach einem der vorhergehenden Ansprüche, welches derart ist, dass der Gehalt an Eisenoxid weniger als 0,015%, insbesondere weniger als oder gleich 0,012 % oder 0,010 % beträgt.

12. Verfahren nach einem der vorhergehenden Ansprüche, welches derart ist, dass das Redox zwischen 0,2 und 0,30, insbesondere zwischen 0,25 und 0,30 beträgt.

13. Verfahren nach einem der vorhergehenden Ansprüche, welches derart ist, dass der Gehalt an SO₃ mehr als oder gleich 0,2 % beträgt.

14. Verfahren nach einem der vorhergehenden Ansprüche, welches derart ist, dass die Glasscheibe kein folgendes Oxid oder Metall umfasst: Sb₂O₃, As₂O₃, CeO₂, CoO, CuO, NiO, Cr₂O₃, MnO₂, V₂O₅, La₂O₃, Nd₂O₃, Er₂O₃, Se, Ag, Cu.

## Claims

1. A continuous method for obtaining glass, comprising steps consisting of:
- charging raw materials upstream of a furnace having several overhead burners disposed in the region of the sidewalls of the furnace, each of said burners being able to develop a flame transversely to the axis of the furnace,
- obtaining a mass of molten glass, and then
- leading said mass of molten glass to a zone of the furnace situated further downstream, at least one burner disposed in the region of this zone being fed with an over-stoichiometric quantity of oxidant such that the molar ratio of oxygen to fuel is greater than or equal to 1.1, and then,
- forming a glass sheet, said glass sheet having a chemical composition that comprises the following constituents in an amount varying within the weight limits defined hereinafter:
| | |
|---|---|
| SiO₂ | 60 - 75 % |
| Al₂O₃ | 0 - 10 % |
| B₂O₃ | 0 - 5 %, preferably 0 |
| CaO | 5 - 15 % |
| MgO | 0 - 10 % |
| Na₂O | 5 - 20 % |
| K₂O | 0 - 10 % |
| BaO | 0 - 5 %, preferably 0, |
| SO₃ | 0.1 - 0.4% |
| Fe₂O₃ (total iron) 0 | to 0.015%, |
| Redox | 0.1 - 0.3. |

2. The method as claimed in the previous claim, wherein the overhead burners are disposed regularly upstream to downstream and are arranged in pairs of burners facing each other, the burners of each pair operating alternately so that at a given instant only burners disposed in the region of one of the sidewalls develop a flame.

3. The method as claimed in the previous claim, such that the furnace has between 6 and 8 pairs of burners and only the two or three pairs of burners situated furthest downstream, or the last pair of burners situated furthest downstream, are fed with an over-stoichiometric quantity of oxidant.

4. The method as claimed in one of the the previous claims such that the furnace has, from upstream to downstream, a first chamber delimiting a glass melting zone and then a refining zone and then a second chamber delimiting a cooling zone for molten glass, all the burners being disposed in the region of the first chamber.

5. The method as claimed in the previous claim, such that the or each burner fed with an over-stoichiometric quantity of oxidant is situated in the region of the glass refining zone.

6. The method as claimed in one of the previous claims, such that the burners are fed with air and fuel.

7. The method as claimed in the previous claim, such that the fuel is chosen from natural gas and fuel oil or any mixtures thereof.

8. The method as claimed in one of the previous claims, such that the over-stoichiometric quantity of oxidant is such that the molar ratio of oxygen to fuel is between 1.1 and 1.3.

9. The method as claimed in one of the previous claims, such that the glass sheet is formed by floating on a bath of tin.

10. The method as claimed in one of the previous claims, such that the partial pressure of oxygen above the glass bath is between 4 and 7%.

11. The method as claimed in the previous claim, such that the iron oxide content is less than 0.015%, notably less than or equal to 0.012% or 0.010%.

12. The method as claimed in one of the previous claims, such that the redox is between 0.2 and 0.30, notably between 0.25 and 0.30.

13. The method as claimed in one of the previous claims, such that the SO₃ content is greater than or equal to 0.2%.

14. The method as claimed in one of the previous claims, such that the glass sheet contains none of the following oxides or metals Sb₂O₃, As₂O₃, CeO₂, CoO, CuO, NiO, Cr₂O₃, MnO₂, V₂O₅, La₂O₃, Nd₂O₃, Er₂O₃, Se, Ag, Cu.
